# EUROPEAN PATENT APPLICATION

(11) **EP 3 159 674 A1**
(43) Date of publication of application: **26.04.2017**
(21) Application number: 15190403.4
(22) Date of filing: 19.10.2015
(51) Int. Cl.: G01N 21/51

(54) **MEASUREMENT CELL FOR SAXS MEASUREMENTS AND FOR DLS MEASUREMENTS**

(71) Applicant: European Molecular Biology Laboratory, 69117 Heidelberg (DE); XtalConcepts GmbH, 22525 Hamburg (DE); Universität Hamburg, 20148 Hamburg (DE)
(72) Inventor: Svergun, Dmitri, 22547 Hamburg (DE); Blanchet, Clement, 22761 Hamburg (DE); Franke, Daniel, 25497 Prisdorf (DE); Gräwert, Melissa, 22529 Hamburg (DE); Cipriani, Florent, 38640 Claix (FR); Meijers, Rob, 22587 Hamburg (DE); Dr. Dierks, Karsten, 22453 Hamburg (DE); Dr. Eckhardt, Annette, 22605 Hamburg (DE); Dr. Meyer, Arne, 21079 Hamburg (DE); Prof. Betzel, Christian, 22869 Schenefeld (DE); Dr. Falke, Sven, 22083 Hamburg (DE)
(74) Representative: Maiwald Patentanwalts GmbH

(57) **Abstract**

The present invention relates to a measurement cell which facilitates a small angle X-ray scattering measurement and facilitates dynamic light scattering measurements within the identical sample compartment of a sample holder. Light transportation means which are arranged and configured for transporting light of the light source towards the sample in the sample compartment and/or for transporting light scattered from the sample towards the detector are comprised. For example, a first and a second window which are optically transparent for the DLS light and the scattered light are presented. The first and second windows are provided at a sample holder which is specifically designed as a SAXS sample holder. Furthermore, a method of solution scattering for quality assessment of a sample is presented.

## Description

### FIELD OF THE INVENTION

The present invention relates to the field of quality assessment of liquid samples, in particular of biological liquid samples. In particular, the present invention relates to a measurement cell for small angle X-ray scattering measurements and for dynamic light scattering measurements, a small angle X-ray scattering device and a method of solution scattering for quality assessment of a sample.

### BACKGROUND OF THE INVENTION

Dynamic light scattering (DLS) is a known detection method to measure the composition of particle sizes in a solution. Particles suspended within a liquid undergo Brownian Motion and DLS monitors the Brownian Motion with light scattering. It is applied to e.g. protein solutions to determine whether the solution is monodisperse and monitor time dependent oligomerization processes/ aggregation in different chemical environments. If the sample indeed consists of one particle species, it is possible to derive the hydrodynamic radius R_{H} of the particle using the Stokes-Einstein relation. Important benefits of DLS are that it only minimally interferes with the processed sample, and that it is fast enough to monitor samples in a high-throughput mode.

Small angle X-ray scattering (SAXS) is a known small-angle scattering (SAS) technique which works on the atomic scale. In the field of scattering this technique is commonly named as SAXS. It is a technique where the elastic scattering of X-rays (wavelength 0,1 ... 0,2 nm) by a sample which has inhomogeneities in the nm-range, is recorded at very low angles, typically 0.1 - 10°. This angular range contains information about the shape and size of macromolecules, characteristic distances of partially ordered materials, pore sizes, and other data. SAXS belongs to a family of X-ray scattering techniques that are used in the characterization of materials. In the case of biological macromolecules such as proteins, the advantage of SAXS over crystallography is that a crystalline sample is not needed. Nuclear magnetic resonance spectroscopy methods encounter problems with macromolecules of higher molecular mass (> 30-40 kDa). The quality of a small angle X-ray scattering experiment depends on the degree of dispersity of the sample and is sensitive to the presence of large aggregated particles.

Furthermore, SAXS measurements are often done in complex environments like in measurement cells that are often part of the sample exposure unit of synchrotron beamlines which provides the X-rays for the measurment. Thus no one has so far suggested the provision of a device and a method which combines DLS and SAXS measurements.

### SUMMARY OF THE INVENTION

The inventors of the present invention have used DLS so far as an independent tool for quality assessment of a protein sample and to determine the hydrodynamic radius of a homogeneous sample. They consider it as strongly advisable to collect DLS data and verify the aggregation state, before the interpretation of the SAXS scattering curve is further refined. Moreover, the hydrodynamic radius R_{H} determined by DLS puts further independent constraints on the size of the particles that are allowed in the calculation of molecular envelopes based on SAXS data. Additionally, a comparison of R_{H} with the X-ray radius of gyration R_{G} can provide important information about the particle flexibility. However, the inventors of the present invention have recognized that due to limited sample volume and time, the DLS measurements are often omitted or performed in different conditions and on different samples than the SAXS analysis. Albeit, both techniques are based on scattering events they complement each other nicely. The scattering of the X-rays yield more information on the shape of the protein, however, the X-rays can also alter the sample (radiation damage). Thus, it is very beneficial to perform DLS measurements in advance / parallel to assess sample quality prior to radiation exposure.

The inventors of the present invention have thus identified the need of a device and a method which combine the DLS and the SAXS technique. The object of the present invention may thus be seen as the provision of a device and a method which is capable of combining DLS and SAXS measurements in the same device.

The object of the present invention is solved by the subject-matter of the independent claims. Further embodiments and advantages of the invention are incorporated in the dependent claims.

Further on, it shall be noted that all embodiments of the present invention concerning a method might be carried with the order of the steps as explicitly described, nevertheless this has not to be the only and essential order of the steps of the described method. In case the terms "first", "second", "third" or "(a)", "(b)", "(c)", etc. relate to steps of a method or use there is no time or time interval coherence between the steps unless indicated otherwise. The herein presented methods can be carried out with another order of the disclosed steps without departing from the respective method embodiment, unless explicitly mentioned to the contrary hereinafter.

Where an indefinite or definite article is used when referring to a singular noun, e.g. "a", "an" or "the", this includes a plurality of that noun unless something else is specifically stated. The terms "about" or "approximately" in the context of the present invention denote an interval of accuracy that the person skilled in the art will understand to still ensure the technical effect of the feature in question. The term typically indicates deviation from the indicated numerical value of ±20 %, preferably ±15 %, more preferably ±10 %, and even more preferably ±5 %.

Furthermore, the terms "first", "second", "third" or "(a)", "(b)", "(c)", "(d)" etc. and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Technical terms are used by their common sense. If a specific meaning is conveyed to certain terms, definitions of terms will be given in the following in the context of which the terms are used.

In the context of the present invention, a measurement cell may be understood as a measurement device. In particular, a measurement cell in the context of the present invention may be understood as a device which facilitates certain measurements like small angle X-ray scattering measurements and dynamic light scattering measurements. Furthermore, in the context of the present invention, the abbreviation SAXS will be used synonymously for the small angle X-ray scattering technique and the abbreviation DLS which will be used hereinafter for dynamic light scattering.

Furthermore, in the context of the present invention, the sample compartment may be understood as a SAXS sample compartment typically used in a SAXS measurement device. The SAXS sample compartment may be embodied for example as a capillary but may for example also be embodied as a SAXS cuvette. The same holds true for the sample holder which shall be understood as a SAXS sample holder. In an exemplary embodiment the sample holder is embodied as a capillary mounting tube. The sample holder and/or the sample compartment may be configured to be optically coupled and in the assembled configuration are optically coupled to the light transportation means used in the measurement cell of the present invention. Said optical coupling facilitates the illumination of the sample with the DLS light of the DLS light source and the collection of the DLS lights scattered by the sample. More details hereabout will be described in the context of specific embodiments of the present invention.

The light source contained and used in the measurement cell of the present invention is used for dynamic light scattering (DLS) of the sample in the SAXS sample compartment. Consequently, the light source will be named as DLS light source hereinafter. Although in some embodiments the light source might be located outside of a housing of the measurement cell, it should be understood in the context of the present invention that the light source is part of the measurement cell. It should be noted that the DLS light source may for example be a laser like e.g. a solid state laser or e.g. a diode laser but of course also other light sources may be used by the skilled person for the DLS functionality of the measurement cell of the present invention. Furthermore, it shall be noted that in the context of the present invention the term "detector" will be used for DLS detectors and shall describe the detection unit which detects the DLS light scattered from the sample.

It should further be noted that the measurement cell/measurement device and the method of the present invention can be used for the determination of the microscale or nanoscale structure of particle systems in terms of parameters like e.g. averaged particle size, shapes, distribution, and a surface-to-volume ratio. The materials can be solid or preferably liquid and they can contain solid, liquid, or gaseous domains, so-called particles, of the same or another material in any combination. Not only particles, but also the structure of ordered systems like lamella, and fractional-like materials can be studied. The method is accurate, non-destructive and usually requires only a minimum of sample preparation. Applications are very broad and include colloids of all types, metals, cement, oil, polymers, plastics, proteins, foods, and pharmaceuticals and can be used in research as well as in quality control, for example. The X-ray source can be e.g. a laboratory source or e.g. a synchrotron which provides a high X-ray flux.

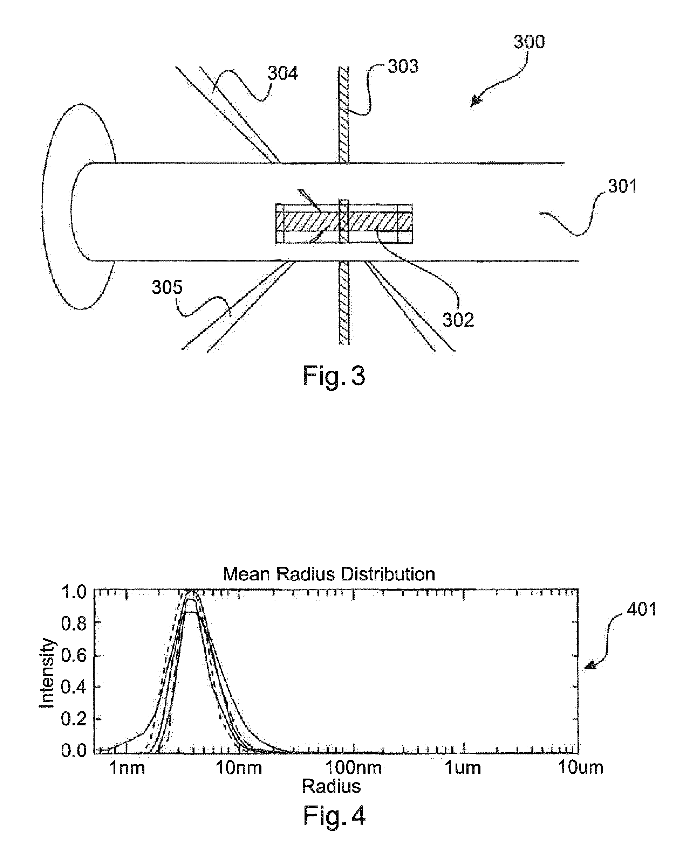

According to a first aspect of the present invention, a measurement cell for small angle X-ray scattering (SAXS) measurements and for dynamic light scattering (DLS) measurements is presented. The measurement cell may be understood as a measurement device. The measurement cell comprises a sample compartment for containing the sample and a sample holder for holding the sample compartment. The measurement cell is configured for guiding X-rays of an X-ray source onto the sample compartment. In other words, it may include an X-ray path. For example, a guiding tube for guiding X-rays of a synchrotron, as exemplarily described in the context of Fig. 4, can be used in the measurement cell. However, also other guiding means can be used in order to guide the X-rays onto the sample compartment to allow for the X-ray scattering at the sample. The measurement cell further comprises a light source which is applied for dynamic light scattering of the sample in the sample compartment. Furthermore, a detector is comprised which is used for detecting light emitted by the light source and scattered by the sample in the sample compartment. The measurement cell further comprises light transportation means which are arranged and configured for transporting light of the light source towards the sample in the sample compartment and/or for transporting light scattered from the sample towards the detector.

The measurement cell of the present invention is a combined measurement device which facilitates measuring DLS and SAXS in the same cell and on exactly the same sample contained in a single sample compartment for both measurements. This device realizes many advantages for the needs of quality assessment of biological samples. In particular, the measurement cell of the present invention ensures that the same sample is provided under the same conditions for the X-ray scattering and the DLS measurement. Furthermore, no extra sample volume is required, which can be very beneficial in case of samples that are difficult to obtain. In addition, no extra time is required for performing both measurements as the measurement cell allows for an automated interpretation of both DLS and SAXS data. The inventors of the present invention also describe this measurement cell as a SAXS device with online DLS. As particularly biological samples can be assessed by this measurement cell it may also be described as BioSAXS with online DLS. These aspects and benefits of the present invention will be described in more detail hereinafter.

The light transportation means which are arranged and configured for transporting light of the light source towards the sample and/or for transporting light scattered from the sample towards the detector can be embodied in many various ways. By means of the light transportation means light can be transported from the light source into the measurement cell to the sammple. They might be embodied as external light transportation means, like e.g. one or more vacuum windows located at a housing of the measurement cell or as internal light transportation means, like e.g. fiber feedthroughs which guide light to through the housing the sample.

Moreover, the light transportation means are configured such that they do not compromise the vacuum which is located inside the measurement cell around the sample capillary, i.e, the sample compartment or the SAXS sample compartment. For example, the vacuum windows and/or fibre feedthroughs mentioned herein are configured such that they do not compromise this vacuum.

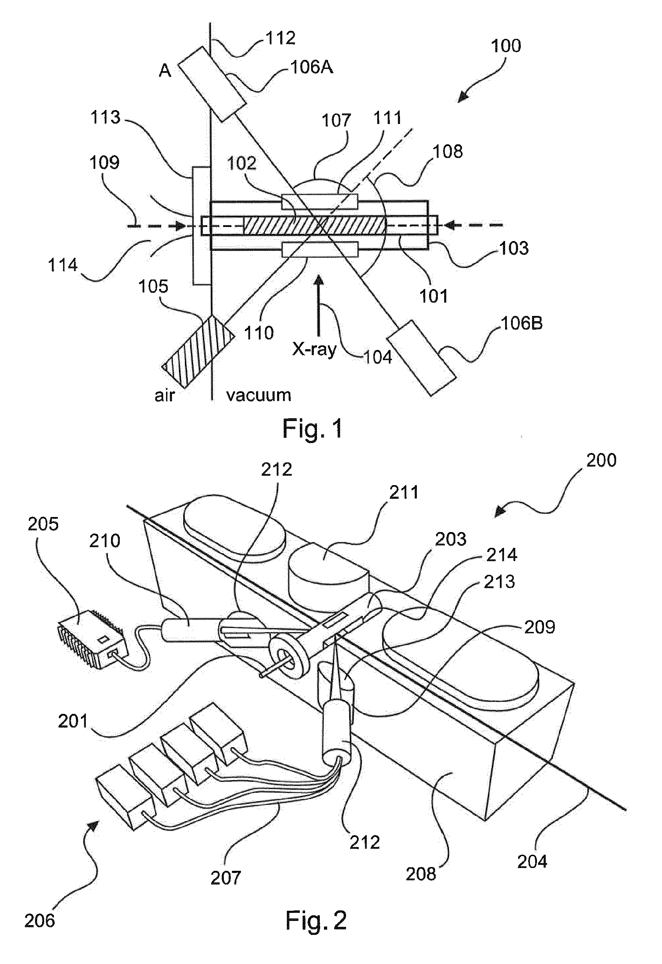

For example an optical free beam configuration can be used in which the measurement cell and/or the sample compartment comprise one or more optical windows which transmit the respective light towards the sample and towards the detector, respectively. In the sample holder the windows may also be emnodied as holes as described exemplarily in the context of Figs. 1 and 2. The windows/holes are optically transparent for the light emitted by the DLS light source and are optically transparent for the light scattered by the sample and which originates from the DLS light source. In the embodiment of Fig. 2 the use of two optical windows and optical free beam sections are combined with the use of fiber optics to transport the light of the light source to the X-ray guiding tube and to transport the scattered light from the X-ray guiding tube to the detector.

Therefore, the light transportation means can also be embodied as fiber optics which may be used instead of or in combination with said optical windows/holes. In particular, fiber feedthroughs may be used to guide the light towards the measurement cell. In an exemplary embodiment fiber optics are used to entirely transport the light from the source to the sample compartment and from the sample compartment to the detector. Fiber optics may be preferred as compared to free beam configurations as fiber optics provide a lot of flexibility for the user. In such a configuration the first end of a first waveguide arrangement is optically coupled to the light source and the second end is optically coupled to the sample holder such that the light transported by the first waveguide arrangement is directed onto the sample contained in the sample compartment. For collecting the scattered light a second waveguide arrangement may be used at a second position of the sample compartment or of the sample holder. The first end of the second waveguide arrangement is optically coupled to the sample compartment or the sample holder such that the scattered light of the sample is collected by the second waveguide arrangement. The second end of the second waveguide arrangement is optically coupled to the detector or to a plurality of detectors.

The measurement cell of the present invention allows for the implementation of DLS laser technology into the characterization pipeline of a standard SAXS measurement device and allows analyzing the dispersity of protein samples in a single measurement cell. The simultaneous or nearly simultaneous measurements of the (e.g. protein) liquid sample by SAXS and DLS in the measurement cell of the present invention not only allows the provision of complementary parameters on the dispersity of the sample but also information on particle dimensions such as the hydrodynamic radius R_{H} and the radius of gyration R_{G} and the ratio thereof, R_{H}/R_{G}.

In a preferred embodiment of this novel measurement device developed by the inventors also a correlation device is comprised for a high throughput quality assessment of SAXS samples and a complementary measurement of the hydrodynamic radius which creates additional value for the used autosampler. Further details about such an autosampelr than can be used in the context of the present invention will be given hereinafter. Thus, a measurement cell is provided with a correlation unit which is configured for automated analysis of the data received from the DLS detector or detectors to determine the hydrodynamic parameter.

According to an exemplary embodiment of the present invention the light transportation means comprise or are embodied as a first and a second window located at a housing of the measurement cell, wherein the first window is optically transparent for the light emitted by the light source and wherein the second window is optically transparent for the light scattered by the sample in the sample compartment.

The size of the optical windows may be chosen with respect to the light beam of the DLS light source. Preferably, the windows of the measurement cell should be vacuum tight such that they do not compromise the vacuum which is located inside the measurement cell around the sample capillary, i.e, the SAXS sample compartment. In a preferred embodiment the windows of the measurement cell are vacuum tight such that a pressure of 10⁻⁴ to 10⁻⁵ mbar inside the measurement cell can be used. The sample holder can be embodied as vacuum-tight chamber that hosts the sample capillary, i.e., the sample compartment. It can be mounted on a YZ stage and can be placed in the beam path, preferably between two fast vacuum valves. Further, the sample capillary can be mounted in an easily replaceable stainless-steel sample compartment/ exposure pod that can be inserted in a thermal exchanger. The term pod will be used synonymously with the term exposure pod herein. In an exemplary embodiment a video microscope and associated lighting system may be comprised by the measurement cell which allows visualization of the sample capillary.

According to an exemplary embodiment of the present invention the light transportation means comprise at least a first and a second window or hole located at the sample holder, wherein the first window or first hole is optically transparent for the light emitted by the light source and wherein the second window or second hole is optically transparent for the light scattered by the sample in the sample compartment.

The size of the optical windows and/or holes at the sample holder may be chosen with respect to the light beam of the DLS light source. For example, in Fig.1 a sample holder 103 is shown which holds the sample compartment 101 in the measurement cell (see e.g. Fig. 2). In this embodiment two holes 110 and 111 are comprised through which the DLS light is transmitted to the capillary and through which the scattered light is transmitted to the detector. Furthermore, the capillary itself may be seen as an optical transparent window at the sample holder. The vacuum is around the capillary in the whole measurement cell. The windows at position 212 and 213 shown in Fig. 2 can be embodied as standard vacuum windows. Details thereabout will be explained in the following.

It should be noted that measurements of macromolecular solutions at high-brilliance beamlines are improved by flowing the sample through the beam path to minimize radiation damage. The measurement cell of the present invention matches this need. To ensure the optimal signal-to-noise ratio, the exposure cell, i.e., the sample compartment, and should be placed in vacuum. In tests done by the inventors the value of 10¹³ photons s⁻¹ focused in 0.3 mm (h) x 0.1 mm (v) was retained as typical beam characteristics for the target beamlines. For a useful energy range, the optimal sample thickness in said tests was between 1 and 1.7 mm. A preferred sample compartment would be in a thin-walled rectangular tube of the desired depth and a height corresponding to the vertical dimension of the beam. For practical reasons (mechanical resistance to vacuum) we opted for a 1.8 mm diameter thin-walled quartz capillary set horizontally in the X-ray beam. This may be seen as a sample compartment comprised by a preferred exemplary embodiment of the present invention.

In an exemplary embodiment of the present invention the X-ray beam size is smaller than the vertical height of the capillary, i.e., the sample compartment, the parasitic scattering from the surface is minimized, but this comes at the expense of sample volume which does not interact with the beam. The advantage of this approach is that if small air bubbles appear at the top of the capillary out of the beam path they do not interfere with measurement. In a further prefereed embodiment the DLS focal points are also smaller to present parasistic scattering.

According to an exemplary embodiment of the present invention the measurement cell comprises a housing in which a first slot and a second slot is comprised.

In an embodiment the focussing optics for the DLS set up is outside of the hosuing of the measurement cell in front of the two windows, e.g. windows 212 and 213 in shown Fig.2 .In the first slot focusing optics can be arranged for guiding the DLS light emitted by the DLS light source towards the sample compartment through the housing. In the second slot optics for collecting light scattered from the sample in the sample compartment can be arranged. In this way the DLS light scattered from the sample is guided towards the outside of the X-ray guiding tube. In another embodiment the light can be transferred through fiber feedthroughs into the measurement cell. The fiber feedthroughs aer located in the two slots. In this case the focussing optics are mounted inside the measurement cell. These exemplary embodiments may be particularly combined with the previously mentioned embodiments defining optical windows in the measurement cell and/or optical windows/holes in the sample holder. Further, an exemplary embodiment of such a measurement cell is depicted in Fig. 2.

According to an exemplary embodiment of the present invention a fiber optics arrangement arranged and configured for at least partially guiding light of the light source towards the sample in the sample compartment is comprised.

This fiber optics arrangement may be embodied, e.g., as the first waveguide arrangement and the second waveguide arrangement as described herein. In an embodiment, e.g. the one shown in Fig. 2, fiber optics 207 are used in some sections of the measurement cell 200 for transporting light to and from the sample compartment.

As has been mentioned hereinbefore some embodiments of the measurement cell of the present invention use fiber optics for the entire transport of the light from the source to the sample compartment and from the sample compartment to the detector. Particularly, fiber feedthroughs as commonly understood by the skilled person may be used to guide the light through the housing of the measurement cell in the direction from the source to the sample and in the direction from the sample to the detector. Such embodiments may be particularly combinable with another exemplary embodiment in which the X-ray guiding tube comprises a first slot and a second slot in which the first and second waveguide arrangements as described hereinbefore are located.

In an embodiment of the present invention an autosampler is comprised.

Such an autosampler is configured for automatically and quickly processing pluralities of samples, e.g. several hundred samples stored in SBS microplates in less than 1 min cycle time per sample. Such an autosampler may also be configured for integrating in-line liquid-handling capacities to allow sample optimization directly in the sample changer. An autosampler may be seen as the architecture in which the exposure cell can be connected to a fixed pipetting needle with very short tubing and the sample wells can be moved towards the needle. This may allow for a low sample volume and high sample turnover.

Macromolecular solutions at high-brilliance beamlines must involve a flow of the sample through the beam path to minimize radiation damage. As little as 5 µl of solution can be transferred in a vacuum-mounted quartz capillary by an autosampler. After exposure, the fluid path of the autosampler can be cleaned and dried automatically. Furthermore, an autosampler is configured for pipetting, for mixing and/or may comprise a sample-loading functionality. In an embodiment, the autosampler can be operated from a graphical user interface or fully controlled remotely. The autosampler may comprise a sample exposure unit which is composed of an exposure cell and a pipetting system. The autosampler may further comprise a fluid management unit which may house a set of peristaltic pumps, aspiration devices, detergent and water supply reservoirs and a disposal container used by the cleaning station. Furthermore, the autosampler may comprise a control unit which is composed of an electronic rack, a computer and screen, e.g. a touchpad screen.

This is particularly true for the use of the measurement cell of the present invention at synchrotron beam-lines. In particular, all major synchrotrons around the world run SAXS beam-lines. Some of these beam-lines are dedicated to biological solution scattering. However, it shall be noted, that the present invention is not only applicable to proteins, but can be used to study all samples that contain particles of nanometer to micrometer size. The herein described measurement cell also provides for a unique add-on tool for laboratory source-based SAXS devices. In general, the measurement cell as described above and as embodied in the various exemplary embodiments described hereinafter can be used to supplement existing SAXS devices.

According to another exemplary embodiment of the present invention, the autosampler comprises the DLS light source and the detector.

The advantages of integrating the DLS light source and the detector into the autosampler are as follows. The same sample is analysed by the X-rays and the DLS light. The samples of course still need to be stored and shipped but performing both measurements on the same sample allows the analysis in the same state without changes that might occur when performing the measurements separately. Furthermore, the results are not time dependent as the DLS results and the X-ray results are generated shortly after each other or at the same time. Moreover, temperature-related changes between the two measurements do not occur and thus a real sample quality assessment can be achieved.

According to an exemplary embodiment of the present invention, the measurement cell is configured for carrying out a DLS measurement and a SAXS measurement on the same sample contained in the same sample compartment when provided with X-rays of an X-ray source and with the DLS light.

As has been described before the measurement cell of the present invention may be combined with different X-ray sources. For example, small X-ray sources used in laboratory-based SAXS devices can be used but also an implementation of the measurement cell into a synchrotron SAXS beam-line is possible, as illustrated in and described in the context of e.g. Figs. 1 and 2. In an embodiment of the present invention the measurement cell may also comprise at least one X-ray detector for detecting the scattered X-rays. The X-ray detector may be integrated in the measurement cell or be located outside of the measurement cell. In an embodiment the X-ray detector is part of the SAXS beamline in which the measurement cell of the present invention can be integrated.

According to another exemplary embodiment of the present invention, the measurement cell comprises a correlation device.

The correlation device may be used for calculating the intensity autocorrelation function (ACF) for each detector channel in set ups where a plurality of channels is used. The used of a plurality of channels is will be exaplained in more detail hereinafter. The detector registers single photons with a certain probability and outputs standardized pulses to the autocorrelation unit. The first step is to count these pulses in time intervals, e.g. less than one microsecond, so that for each of these intervals the light intensity is sampled. The ACF can then be calculated by multiplying the most recent sample with samples acquired a certain time difference earlier. This is done for many (typically e.g. 200) time differences from e.g. less than one microsecond to several seconds. Finally a time average over many of these multiplication results is calculated. All these calculations can be performed either by a digital signal processor or by programmable logic devices, which can be part of the measurement cell of the present invention. The resulting autocorrelation functions can be sent to a computer for further analysis. Besides this the autocorrelation unit may handle tasks like switching the laser on before starting a measurement and switching it off afterwards.

According to another exemplary embodiment of the present invention, the correlation device is configured for determining at least one parameter selected from size and/or radius for one or more particle species contained in the sample, polydispersity, estimation of a molecular weight of one or more particle species contained in the sample, information about particle concentration, and any combination thereof. DLS is a method for determination of size distributions of particles suspended in a fluid. Typically radius distribution as obtained as the relative amount of particle size fractions in a given interval from less than about one nanometer up to several micrometer are determined. Tools typically used for raw data analysis usually deliver a few more data, like size or radius for each particle species, the corresponding peak width, called polydispersity, an estimation of the corresponding molecular weight and information about particle concentration. However, DLS is not limited to these parameters, many other aspects could be analysed as well.

According to another exemplary embodiment of the present invention, the correlation device is configured for determining a first parameter on the dispersity of the sample based on the scattered and detected light of the DLS light source .The correlation device is further configured for determining a second parameter on the dispersity of the sample based on the scattered and detected X-rays. In a preferred embodiment, the correlation device may be further configured for a quality assessment of the sample based on the detected light scattered by the sample and/or may be configured for calculating the hydrodynamic radius of particles comprised in the sample based on the detected and scattered DLS light.

The correlation device of this embodiment allows for a high throughput quality assessment of SAXS samples and a simultaneous or nearly simultaneous complementary measurement of the hydrodynamic radius and thus creates additional value for the evaluation of the sample. For example, the hydrodynamic radius of particles contained in the sample can be determined by DLS and this can put further independent constraints on the size of the particles that are allowed in the calculation of molecular envelopes based on the SAXS data, i.e. based on the detected X-rays. All this may be calculated/ processed by an embodiment of the correlation device. For example, the correlation device of a preferred embodiment may be configured to determine a radius of gyration R_{G} and the correlation device may thus compare the hydrodynamic radius determined by the DLS measurement of the measurement cell of the present invention with the X-ray radius of gyration R_{G} determined by this measurement cell which provides important information about the particle flexibility. However, for the first time, such a determination of these parameters on the dispersity of the sample can be carried out in a single measurement cell and either simultaneously or nearly simultaneously, such that no time is wasted and such that no change in the sample needs to be taken into account when evaluating the resulting data.

It should be noted, that the correlation device of the present invention may be embodied as for example a calculation device or a processor with appropriate software. The correlation device may further be configured for determining an autocorrelation function of the sample which is contained in the sample compartment.

According to another exemplary embodiment of the present invention, the measurement cell comprises a plurality of detectors, wherein each detector of the plurality of detectors is configured for detecting light emitted by the DLS light source and scattered by the sample. Furthermore, the correlation device is configured for calculating for each of the detectors a respective autocorrelation function of the sample. Furthermore, the correlation device is configured for averaging the respective calculated autocorrelation functions.

In particular, this embodiment facilitates that time can be saved during the DLS measurements. Due to this increase in DLS measurement speed the DLS measurement is fast enough to be comparable with average SAXS measurements allowing for an online, simultaneous measurement of both DLS and SAXS. This embodiment may thus be of particular interest for synchrotron applications.

The measurements of single DLS autocorrelation curves, i.e. DLS autocorrelation functions, may take several seconds, and the sample flow should be low or zero to be able to measure the pure Brownian motion of the fluid. It should be noted that the signal improves when longer periods are measured. Autocorrelation is calculated after the recording of intensity fluctuations. These constraints should be taken into account while designing a pipeline for DLS and SAXS. To reach this goal, DLS measurements are performed in situ, i.e., directly in the sample compartment, for example a capillary that holds the sample also during the SAXS experiment. To increase the speed of the reliable detection of the DLS autocorrelation function (ACF), a plurality of independent detectors is implemented. In a preferred embodiment, for each detector an independent photomultiplier channel can be implemented at a different area of the sample compartment. Averaging of the resulting autocorrelation function decreases the required measurement time and thus becomes comparable with the SAXS measurement time. Thereby, the scattering centres, i.e., different parts of the sample, should be far enough apart to ensure statistical independence of each detection channel.

According to another exemplary embodiment of the present invention, the correlation device is configured for averaging the autocorrelation functions and a subsequent inversion of the averaged autocorrelation functions to a radial distribution, or the correlation device is configured for simultaneously inverting all autocorrelation functions by a computer program.

It should be noted that programs may be used which are originally intended for the application of data obtained from varying scattering angles, but such programs may be used for the application described here as well. Running such a program with simulated data showed that this algorithm is suitable for the here described purposes.

According to another exemplary embodiment of the present invention the DLS light source has a distance f to the sample compartment of 100 mm or less and/or the detector for detecting the scattered DLS light has a distance f' to the sample compartment of 100 mm or less.

Tests which were conducted by the inventors have shown that when using a SAXS capillary or a SAXS sample compartment for DLS measurements in the invented measurement cell the distances between the elements, light source to sample compartment f and sample compartment to light detector f', shall be below 100 mm in order to receive a specific quality of the results. Consequently, short distances are preferred as the shorter the distance is, the stronger the signal will be. However, in other embodiments of course larger distance values may be applied. Furthermore, the inventors found that a symmetric setup, f=f', and a symmetric configuration is preferred but also asymmetric configurations, f ≠ f', were working reliably.

According to another exemplary embodiment of the present invention, the detector detects DLS light scattered at the sample at a scattering angle (γ), wherein the scattering angle (γ) is between 75° and 108° including 75° and 108°.

In the context of the present invention the term "scattering angle" (γ) is used in the technical meaning of the configuration shown in Fig. 1 with detector 106A and angle 107. Here, the scattering angle (γ) is defined between the path of the scattered light to detector 106A and the extension of the incoming DLS light through the sample. If another scattering angle 108 for detector position 106B is meant this is explicitly mentioned.

To find out preferred scattering angles, a first testing was performed with a set-up an arrangement of the capillary that holds the sample, the laser and the detector system off-line. The used SAXS capillaries act as strong cylindrical lenses, so special care had to be taken to find the right geometry to appropriately detect the scattered light. The inventors found that when combining DLS and SAXS measurements in one measurement cell, the DLS data collected with an angle smaller than 75° do not allow a high quality assessment of monodispersity. Furthermore, an accurate determination of the size of the particles in the solution was complicated with a scattering angle (γ) below 75°. In some embodiments it may be impossible below 75°. Furthermore, the upper limit of 108° results from the geometry of the typical pods used in SAXS instruments. Consequently, the inventors of the present invention found that when combining SAXS and DLS measurements, the upper limit of 108° for the scattering angle should be considered.

In the following the main components and functionalities of a pod of a SAXS instrument will be described. The skilled person will find additional information about the pod in the article Round et. al., BioSAXS Sample Changer Acta Cryst. (2015). D71, 67-75, which is incorporated herein by refernce in it's entirety with respect to the pod of the present invention. Such a pod may be part of the present invention. The pod may consist of a metal part equipped with the capillary, i.e., the sample compartment. It allows to easily and quickly exchanging the capillary, in particular without having to glue it. The metal part of the pod is in contact with the capillary for heat exchange. The pod is preferably machined to let access to the incoming beam, scattered photon, illumination, camera and the DLS. In an embodiment the pod is placed in the beam path, preferably between two fast vacuum valves that immediately close when a drop in vacuum is detected. The surfaces of the metal part may be inserted in an O-ring. The limit of 108° is defined here by the opening of the pod through which the capillary can be accessed by laser and detector.

According to another exemplary embodiment of the present invention, the measurement cell comprises an automatic pipeline which receives the data obtained from the DLS and SAXS measurements.

In the following the main components and functionality of an automatic pipeline of a SAXS instrument will be described. The publication Blanchet et al J. Appl. Cryst. (2015) 48, 431-443 describe an automatic pipeline which can be combined with the present invention. This document is thus incorporated in its entirety, at least with respect to the disclosure of the automatic pipeline. A full data analysis pipeline (SASFLOW), starting from handling two-dimensional scattering patterns and ending with the construction of the ab initio low-resolution particle shape, is implemented, which is a further development of the prototype reported by Franke et al., Nucl. Instrum. Methods Phys. Res. Sect. A, 689, 52-59. A major advantage of the modular setup of SASFLOW is the possibility to easily add additional components to the pipeline for specific experiment types. The outcome of a SAXS measurement is a two-dimensional scattering pattern, which is radially averaged and normalized against the transmitted beam intensity. Exposure of a specimen results in a number of frames (typically 20), which are compared to detect radiation damage using a novel approach called correlation map (see D. Franke et al. Nature Methods, 6 April 2015. DOI: 10.1038/nmeth.3358). The frames that do not have any statistically significant differences are automatically averaged to improve the signal-to-noise ratio. Typically a buffer is measured before and after each sample. The buffer background is subtracted from the sample signal, followed by normalization by the sample concentration. Further analysis of the subtracted data includes evaluation of the radius of gyration (Rg) and the forward scattering I(0) from the Guinier approximation, see Guinier, A. & Fournet, G. (1955). J. Polym. Sci. 1, 268. The forward scattering I(0) as well as the Porod volume are used to estimate the molecular weight of the macromolecule. Currently, molecular weights are determined from the forward scattering value using a calibration standard (bovine serum albumin). Automatic absolute scaling, using the scattering of pure water and of the empty capillary, is in development and will be available in the near future. The pair distance distribution function p(r) is automatically computed and provides another estimate for the radius of gyration and the maximum dimension of the particle, Dₘₐₓ. These aspects may be used in combination with the present invention.

In other words, a combined automatic pipeline measuring DLS and SAXS in the same cell is presented which is extremely helpful for a fast and reliable analysis of biological sample. For example, this measurement cell of the herein described embodiment may be implemented at the P12 beam-line of the EMBL@PETRA3 where sample processing is then fully automated. Further details hereabout will be described in the context of exemplary embodiments hereinafter.

According to another exemplary embodiment of the present invention, an autosampler is comprised by the measurement cell. The autosampler is configured for initiating loading of the sample, data collection, discarding the sample and washing and drying the sample compartment.

In general, the time for running a measurement is a crucial and important parameter when designing a measurement device. Efficient use of the SAXS beam-line involves short measurement times per sample in the order of seconds. These limited exposure times reduce the risk of damaging the sample by overexposure to ionizing X-ray radiation. When implementing the measurement cell at e.g. the P12 beam-line of the EMBL@PETRA3, sample processing can then be fully automated. Thus, in less than a minute, the autosampler can initiate the loading of the sample, the data collection, the discarding the sample and the washing and drying the capillary, i.e., the sample compartment, in preparation for the next sample. The measurement cell of the present invention facilitates integration of DLS measurements in this process without delaying the sample processing time of this high throughput sample pipeline.

According to another exemplary embodiment of the present invention, the sample holder is at least partially surrounded by vacuum and the light source of DLS is positioned outside of the vacuum. The sample holder as described herein may be seen as a typical SAXS sample holder which is surrounded by vacuum. This allows propagation of the X-rays from the X-ray source to the sample without having to propagate through many different media other than vacuum. Preferably the vacuum surrounding the sample holder is a high vacuum, i.e. in the range of 10⁻⁴ to 10⁻⁵ mbar. The exposure cell is a vacuum-tight chamber that hosts the sample capillary, i.e., the sample compartment. To ensure the optimal signal-to-noise ratio, the exposure cell should be placed in vacuum and its thickness appropriately selected. Two fast vacuum valves placed upstream and downstream of the sample exposure unit allow an exposure pod to be changed without the need to break the vacuum in the other beamline sections. When the vacuum drops below a threshold value, a vacuum sensor immediately closes both valves, thus preventing contamination of the upstream beamline and the downstream flight tube. After the sample exposure unit there is the so called flight tube (for vacuum) up until the detector. If there is a leak in the measureing cell the vacuum would break and this could lead to big problems for the detector and it would take long to get the vacuum back again. Thus as an emergency, there are valves installed that prevent this.

Furthermore, specific beamline hardware controls pumping and venting of the Sample Exposure Cell. Two electrical signals are connected to the control unit of the Sample Changer to ensure safe operation of the beamline. 'Pod in place' indicates that vacuum can be applied to the Sample Exposure Unit; 'Vacuum Is OK' indicates that an experiment can be performed. In the case of a capillary leak the 'Vacuum Is OK' signal becomes false and capillary filling and cleaning are stopped.

According to another exemplary embodiment of the present invention, the measurement cell is configured for avoiding stray light caused by reflections of light of the light source on at least one of the windows and/or on the sample holder.

It is beneficial to avoid parasitic stray light caused by reflections on the sample compartment glass surface or by the capillary holder in order to receive data that are reliable.

According to another aspect of the present invention, a small angle X-ray scattering device is presented. The SAXS device comprises an X-ray source, in particular a synchrotron, and a measurement cell configured for SAXS measurements and for DLS measurements in the same sample compartment according to any of herein described measurement cell. Thus a complete device is presented including all components to carry out all desired measurements. For example, a measurement cell of the present invention implemented in a SAXS beamline like the P12 beam-line of the EMBL@PETRA3 is such a device.

According to another exemplary embodiment of the present invention, a method of solution scattering for quality assessment of a sample is presented. In particular, the method presented can be applied to a biological sample. The method comprises the steps of conducting a dynamic light scattering measurement of the sample within a sample compartment in a small angle X-ray scattering device. Furthermore, the step of conducting a SAXS measurement of the sample in the same compartment and in said SAXS device is comprised by the herein presented method.

It should be noted that all different aspects and embodiments described for the measurement cell of the present invention are also applicable to the method of solution scattering. Consequently, a large variety of different embodiments of the method of solution scattering for quality assessment of the sample are presented by the present inventors.

This method allows a simultaneous measurement of a protein liquid sample by SAXS and DLS which can not only provide complementary parameters on the dispersity of the sample but also information on the particle dimensions (like e.g. R_{H}/R_{G} ratio).

In a preferred embodiment, the method comprises the step of directing light from a DLS light source to the sample in the sample compartment which is hold by a sample holder of a measurement cell. Furthermore, detecting the light emitted by the light source and scattered by the sample in the sample compartment and determining a first parameter on the dispersity of the sample based on the scattered and detected light is comprised. Moreover, directing X-rays from an X-ray source onto the sample as well as detecting X-rays emitted from the X-ray source and scattered by the sample is comprised. Determining a second parameter on the dispersity of the sample based on the scattered and detected X-rays is comprised. These steps may be carried out by the measurement cell as presented before when providing X-rays from an X-ray source to the measurement cell.

It may be seen as the gist of the invention to integrate a specific DLS unit into a measurement cell capable of doing SAXS measurements where additionally light transportation means which are arranged and configured for transporting light of the light source towards the sample in the sample compartment and/or for transporting light scattered from the sample towards the detector are provided. For example, windows and/or holes can be provided at the measurement cell and at the sample holder, i.e. a, SAXS sample holder, such that a bio SAXS device can be presented with online DLS. The use of a SAXS beamline together with a DLS measurement device in one structural unit, i.e., the measurement cell, is a novel device with a lot of benefits described hereinbefore and hereinafter.

The measurement cell of the present invention uses the DLS data and/or results from the DLS measurement for a quality assessment of a protein sample and for determining the hydrodynamic radius of a homogeneous sample. The DLS data are collected and the aggregation state of the sample is verified before the interpretation of the SAXS scattering curve is further refined. Moreover, the hydrodynamic radius R_{H} determined by DLS is used by the measurement cell as an independent constraint on the size of the particles that are allowed in the calculation of molecular envelopes based on SAXS data, which is also comprised in this method. Additionally, a comparison of R_{H} with the X-ray radius of gyration R_{G} is done by the measurement cell which provides important information about the particle flexibility. Thus, this measurement cell can be successfully used although limited sample volume and time might only be available and this measurement cell avoids that the DLS measurements are omitted or performed in different conditions and on different samples than the SAXS analysis.

### BRIEF DESCRIPTION OF THE DRAWINGS

Exemplary embodiments of the invention will be described in the following drawings.
Fig. 1 schematically shows the geometry of a sample holder which is inserted in a measuremt cell according to an exemplary embodiment of the present invention.
Fig. 2 schematically shows a three-dimensional representation of a measurement cell according to an exemplary embodiment of the present invention used in tests conducted by the inventors.
Fig. 3 schematically shows the inner part of a measurement cell according to an exemplary embodiment of the present invention comprising a sample holder and a sample compartment.
Fig. 4 shows data calculated by a correlation device of a measurement cell according to an exemplary embodiment of the present invention.
Fig. 5 shows test data derived with a measurement cell according to an exemplary embodiment of the present invention.
Fig. 6 shows a cut view through a measurement cell according to an exemplary embodiment of the present invention showing a capillary, a capillary holder and the paths of the DLS light and the X-rays.
Fig. 7 schematically shows a flow diagram of a method of solution scattering for quality assessment of a sample according to an exemplary embodiment of the present invention.

In principle, identical parts are provided with the same reference symbols in the figures.

### DETAILED DESCRIPTION OF EMBODIMENTS

According to a first exemplary embodiment of the present invention Fig. 1 schematically shows a sample holder which is inserted in a measuremt cell 100 for SAXS measurements and for dynamic light scattering (DLS) measurements. Fig. 1 schematically shows the SAXS capillary axis in the DLS laser-detector plane. In the measurement cell 100 a sample compartment 101 for containing the sample 102 and further comprises a sample holder 103 for holding the sample compartment is shown. The measurement cell shown in Fig. 1 is configured for guiding X-rays 104 of an X-ray source, not shown here, onto the sample compartment 101. The DLS light source 105 which is part of the measurement cell 100 is applied for DLS of the sample in the sample compartment 101. In the schematic drawing of Fig. 1 a window is located in the housing 112 of the measurement cell throug which the source 105 emits light into the inner part of the measurement cell. Furthermore, the measurement cell 100 comprises a detector 106A and/or detector 106B for detecting light emitted by the light source 105 and scattered by the sample. Further, the schematic drawing of Fig. 1 also shows that for detctor 106 A window is comprised in the housing 112 of the measurement cell through which the scattered radiation is transmitted to the detector 106 A. A flange 113 having an opening 114 is also comprised to fit in the measurement cell vacuum tight into the sample chamber.

The inventors of the present invention have found that both positions, 106A and 106B, of the detectors are well possible when combining DLS and SAXS measurements. Furthermore, the sample holder 103 comprises a first window 110 and a second window 111 which are optically transparent for the light emitted by the DLS source and the light scattered by the sample, respectively. Alternatively, windows 110 and 111 can be embodied as holes as described herein. The first and second windows 100, 111, and also the sections where the light propagates through vacuum or through any gas, shall be understood in the context of the present invention as light transportation means. These light transportation means are positioned at the sample holder 103 and/or at the housing of the measurement cell. These light transportaton means are configured for transporting light of the light source towards the sample in the sample compartment and/or for transporting light scattered from the sample towards the detector. In the context of the present invention the term "scattering angle" (γ) is used in the technical meaning of the configuration shown in Fig. 1 with detector position 106A and angle 107. Here, the scattering angle (γ) is defined between the path of the scattered light to detector 106A and the extension of the incoming DLS light through the sample. If another scattering angle 108 for detector position 106B is meant this is explicitly mentioned.

Based on the geometry of Fig. 1, the inventors made a design study to determine the best confirmation to incorporate the optics needed for the DLS installation into an autosampler of an existing SAXS device. A preliminary study indicated that it should be possible to operate a DLS laser outside the vacuum that is surrounding the sample compartment. Two optic windows that allow the passage of incoming laser light and the outgoing scattered light were incorporated into the measurement cell and two holes were incorporated into the sample holder. A laser diode with an optimal wavelength of 650 nm and an optical power of 100 mW is aimed at the center of the sample compartment. A backstop that absorbs the direct laser light has been inserted into the vacuum chamber. The scattered light is recorded by a detector containing photomultiplier tubes. In order to replace the sample capillaries once in a while, a calibration protocol to align the laser and the detector has been designed. Since the DLS equipment is mounted outside the vacuum chamber in this design, it is possible to align the laser with a secondary light source and/or the CCD camera that is already part of the autosampler design. For this, the offline design state was used to prepare an efficient alignment scheme.

To find out the best incidence angles of the laser and detector beams with respect to the capillary, a first testing was performed with a set-up an arrangement of the capillary that holds the sample, the laser and the detector system off-line. Capillaries act as strong cylindrical lenses, so special care had to be taken to find the right geometry to detect the scattered light. The inventors have been successful in detecting a DLS signal from capillaries with an even smaller diameter than the SAXS capillary. It is important to avoid parasitic stray light caused by reflections on the glass surface or by the capillary holder.

Parasitic stray light entering the DLS detector may have an adverse effect on the measurement quality or may even make measurements impossible. Thus it is important to reduce the stray light as much as possible. For this purpose various measures are provided according to different embodiments of the present invention. According exemplary embodiments of the present invention stray light may be avoided by selecting at least one of black surface treatment of components near the beam (e.g. black anodized), blinds to catch stray light, antireflective coating of optical components (e.g. the windows or lenses), suitable choice of angles to direct reflections away from the detector, an efficient beam stop for the illuminating laser beam, or any combination thereof.

The main observations from this primary tests were that distances between elements (laser to capillary f, capillary to detector f) should be smaller than 100 mm for receiving very good signals. The tests were done in a symmetric set-up (f=f') and a symmetric configuration is preferred, but an asymmetric configuration is also acceptable. The inventors found that for preferred embodiments the scattering angle µ should be larger than 75° and/or smaller than 108°.

Regarding the orientation of the sample compartment, e.g. the capillary, the following should be noted. The test conducted by the inventors used a configuration as shown in Fig. 1, with the capillary axis in the laser-detector plane. This is the most useful configuration given the geometry of the pod of a typical SAXS device. But other configurations, for example, with the capillary axis perpendicular to the laser-detector plane would also work for DLS. Installation of both laser and detector on the front side of the SEU, i.e., position 106 A of the detector, is suitable for easy tuning and adjustment of the laser and detector.

The inventors found that a preferred configuration is to leave all DLS equipment outside the sample holder, except for an absorbing filter for the direct laser light. The SAXS sample holder may be modified to allow for two optical windows and bellows at a steep angle to allow the laser path to enter and the scattering to be recorded. An issue was the thermal exchanger of the pod that does not allow setting the optics at 90°.

Another option is to have the two "beams" close to the X-ray beam, upstream and on the same side of the capillary (back scattering). The focusing optics would be then placed on top and aside the capillary, with light redirected by two small mirrors set at 45° (the X-ray beam passing between the two mirrors). This would imply modifying the focusing optics for 100-120 mm working distance, with larger lenses to preserve the aperture.

An important part of any automation system is a reliable communication between the associated devices. The inventors applied a service that mediates user input to the individual components (autosampler, detector, shutters, etc). As it was devised as a service to communicate with other beam-line servers, it was termed the Beamline Meta Server (BMS). For a convenient setup and usage of the BMS the Python scripting language is employed. Each controlled device and each executable command is encapsulated into individual Python classes each with a defined interface, both grouped into Python packages. This organization allows to quickly incorporate new devices and commands as prototyping can be done at the Python command-line prompt while deployment is done by copying the file into the package directory and restarting the BMS application. Due to this infrastructure the integration of the DLS device into the existing software should be straight forward. Further, the measurement cell of the present invention was used in the following tests. The DLS setup around the sample capillary was tested in a laboratory setting. Tests have been done to determine the boundaries to measure meaningful autocorrelation curves. This was done by varying the flow rate of the sample, starting with a stationary state lasting several seconds, and ending with a continuous flow at 0.3 mg/mL. As it is possible to measure meaningful DLS signals under these conditions, it will be possible to use the DLS together with on-line size exclusion chromatography and the MALVERN box for extended biophysical characterization.

According to another exemplary embodiment of the present invention Fig. 2 schematically shows a measurement cell 200 for SAXS measurements and for DLS measurements and implemented at a synchrotron. It should be noted that the aspects and different functions of the embodiment of Fig. 2 described hereinafter can also be applied to other embodiments of the present invention. The measurement cell 200 comprises a sample compartment 201 and a sample holder 203, embodied here as a capillary mounting tube, for holding the sample compartment. The sample compartment 201 of Fig. 2 is embodied as a capillary containing the sample which is mounted into the capillary mounting tube 203. A guiding tube 208 for the X-rays 204, in particular for the synchrotron beam, is comprised. The X-ray guiding tube 208 comprises the first slot 212 and the second slot 213. In the first slot focusing optics 210 are arranged in order to guide the DLS light emitted by the laser 205 towards the sample compartment 203 through the X-ray guiding tube. In the second slot 213 optics 209 for collecting light scattered from the sample in the capillary 201 are arranged. In this way the DLS light scattered from the sample is guided towards the outside of the X-ray guiding tube. As can be seen in Fig. 2 fiber optics 207 are used in some sections of the measurement cell 200 as light transportation means for transporting light to and from the sample compartment. As has been explained herein before, alternatively also fiber optics may be used in other embodiments to entirely transport the light from the DLS light source 205 to the sample and to transport the scattered light from the sample compartment to the detector 206. The measurement cell 200 comprises as light transportation means two optical windows 214, one of which is only shown in Fig. 2 due to perspective reasons. Said windows could alternatively be embodied as holes. The two optical windows are located at the sample holder 203 and the first window (not shown) is optically transparent for the light emitted by the light source 205 and the second window 214 is optically transparent for the light scattered by the sample in the sample compartment 201. Fig. 2 further shows four DLS detectors which are connected by glass fiber light guides with receiving optics 209. In the same way, laser 205 is connected by a light guide with focusing optics 210. Fig. 2 additionally shows a camera shaft 211. The camera in the camer shaft looks through the rectangular hole on top of sample holder 203. The camera can be used during the loading of the sample in the capillary to automatically finely adjust the position of the sample in the X-ray beam 204.

Fig. 2 is a schematic drawing of the sample environment at the BioSAXS beamline with integrated DLS. The X-rays 204 travel from right to left through vacuum, and they hit the capillary containing the sample. The DLS laser 205 can be located outside the vacuum holder. This requires an optic window that allows the laser light to travel through the vacuum to hit the capillary. The scattered laser light will be recorded through a second optic window by photo-multiplier cameras that are mounted outside the vacuum chamber. A correlation unit, not shown in Fig. 2, can be used for calculating or determining autocorrelation functions as is described hereinbefore in detail. The measurement of a single DLS autocorrelation curve may take several seconds, and the sample flow should be low to be able to measure the pure Brownian motion of the fluid. These constraints should be taken into account while designing a pipeline for DLS and SAXS. To reach this goal, DLS measurements are performed in-situ, i.e. directly in the capillary that holds the sample during the SAXS experiment. To increase the speed of the reliable detection of the DLS autocorrelation function (ACF), four independent photomultiplier channels 206 have been implemented at four different areas of the capillary in the set up of Fig. 2. The detector optics have been arranged to image the laser beam as it passes through the capillary on the ends of the monomode fibers, leading the light to the detector. 4-channel photomulitplier tubes, as can be purchased off-the-shelf from Hamamatsu, have been employed. Averaging of the four resulting autocorrelation functions decreases the required measurement time to about 1-2 seconds, comparable with the SAXS measurement time. Thereby, the scattering centers should be far enough apart to ensure statistical independence of each detection channel. Data analysis is done either by averaging all ACFs and subsequent inversion of the averaged auto-correlation functions to a radial distribution, or by the simultaneous inversion of all acquired ACFs by programs such as Contin-multiq. This program is originally intended for the application of data obtained from varying scattering angles, but it may be used for the application described here as well. Running this program with simulated data showed that this algorithm is suitable for the here described purposes.

The embodiment of Fig. 2 allows also for an automatic process of the DLS and SAXS measurements. The user may place the samples into the automated sample-loader, e.g. in two 96 well plates or e.g. in small reagent tubes. Information on the sample can be entered into a user interface of the measurement cell 200 and the "job" is submitted. The measurement includes a loading of the sample, filling of the capillary (detection of the surface front is used to "fix" the sample in correct position for the measurement), a cross-check can be performed to ensure the beam-line is "ready" and then the required shutters are opened and the scattering is recorded.

In the new device 200, prior to the X-ray exposure, the DLS data is recorded (e.g. default setting: four parallel readings of 5 sec each). The user simply has to add additional information on the viscosity and the refractive index of the solution that is passed on to the pipeline and used for the automated data processing steps. As the DLS measurements are not invasive and no alterations of the samples are expected, it is advisable to perform this measurement before the SAXS analysis as the X-ray exposure can cause radiation damage. DLS analysis is incorporated into the automated output file (e.g. an html overview) of the collected SAXS data. Samples that reveal a high degree of polydispersity can be flagged and if feasible R_{H}/R_{G} ratios are incorporated into down-stream calculations.

The following should be noted when implementing software that can be used with the present invention. A software interface between Spectrosize and the beamline interface has been designed to trigger the DLS parts of the measurement cell, DLS data recording and DLS analysis. Primarily, the DLS data will be used as a direct quality control indicator of the measured sample. In addition, the determined hydrodynamic radius of monodisperse and nano-size particles can be used as a constraint in the envelope calculations performed with the collected SAXS data. The operation of the laser, photomultiplier array and the DLS data analysis have been synchronized (so that the sample is loaded, the DLS data is recorded followed by the SAXS measurement). After automated analysis the hydrodynamic parameters determined are made available to the SAXS pipeline for further processing in real time. Most importantly, samples for which the DLS measurements suggest a high degree of polydispersity are flagged so that further processing is performed with great caution.

Fig. 3 shows a sample holder in form of a capillary mounting device 301 of a measurement cell 300 according to another exemplary embodiment of the present invention. The capillary 302 with the sample is entirely fixed at the capillary holding device 301 such that the capillary 302 cannot move during the X-ray and DLS measurements. DLS laser beam 304 is directed onto the sample and the scattered DLS light towards the DLS detector is shown with 305. The synchrotron beam 303 is also depicted in Fig. 3. To measure DLS online, the sample changer of the measurement cell is equipped with two windows or holes for the DLS laser and detector to point to the capillary. Thus, according to an exemplary embodiment of the present invention the sample changer of the measurement cell comprises said two windows/holes as they are described herein in combination with the sample holder. The sample holder may be seen as part of the sample changer.

Fig. 4 shows a mean radius distribution 401 determined with the measurement cell according to an exemplary embodiment of the present invention. The derived distribution functions of the radius of hydration (R_{H}) derived thereof can clearly be gathered from the shown curves in 401.

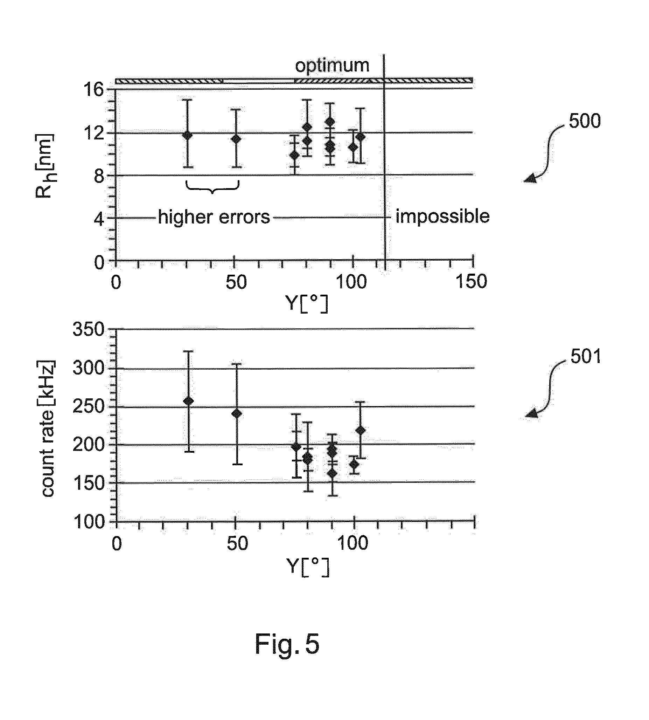

Fig. 5 shows test data of the scattering angle generated with a measurement cell according to an exemplary embodiment of the present invention.

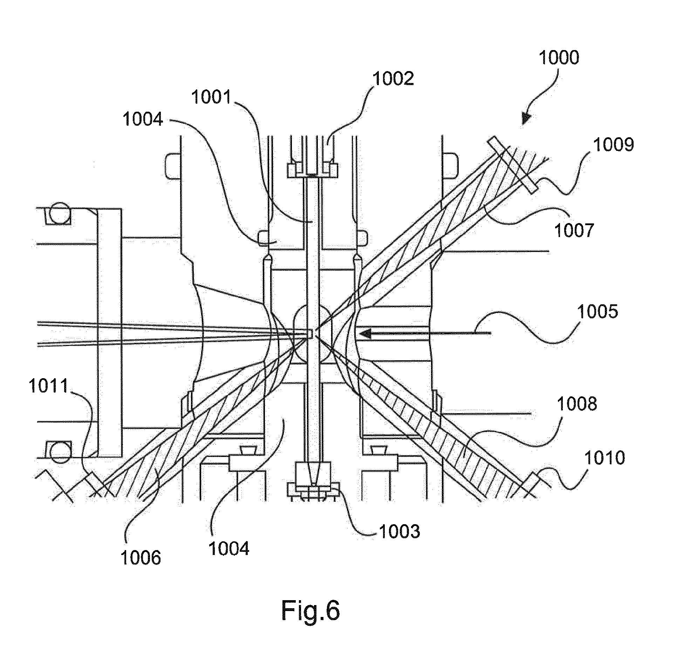

Fig. 6 shows a cut view through a measurement cell 1000 according to an exemplary embodiment of the present invention showing a capillary, a capillary holder, and the paths of the DLS light and the X-rays. Fig. 6 shows a cut view of the inner part of a measurement cell 1000 comprising the capillary holder 1002 holding the capillary 1001. The pod limits 1004 are depicted as well and it can easily be gathered that the laser beam 1006 of the DLS source is focused onto the sample. Fig. 6 shows as well that the scattered DLS light 1008 is diverging light. In the orientation shown in Fig. 6, the X-rays 1005 propagate from the right-hand side of Fig. 6 through the capillary 1001 to the left side of Fig. 6. In the measurement cell 1000 vacuum windows 1009, 1010 and 1011 are comprised.

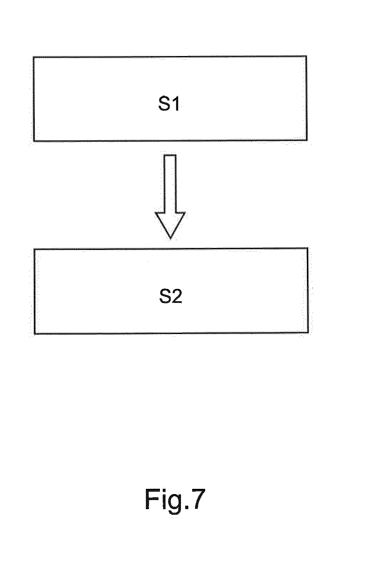

Fig. 7 schematically shows a flow diagram of a method of solution scattering for quality assessment of a sample. In step S1, a dynamic light scattering measurement of the sample within a sample compartment in a small angle X-ray scattering device is conducted. Furthermore, a SAXS measurement of the sample in the same compartment and in the same SAXS device is conducted in step S2.

This method can be supplemented by several method steps as have been described before.

In particular, the method described in Fig. 7 can be supplemented by the following aspects. The DLS data and/or results from the DLS measurement can be used for a quality assessment of a protein sample and for determining the hydrodynamic radius of a homogeneous sample. The DLS data are collected and the aggregation state of the sample is verified before the interpretation of the SAXS scattering curve is further refined. Moreover, the hydrodynamic radius R_{H} determined by DLS is used as an independent constraint on the size of the particles that are allowed in the calculation of molecular envelopes based on SAXS data, which is also comprised in this method. Additionally, a comparison of R_{H} with the X-ray radius of gyration R_{G} is comprised in this method which provides important information about the particle flexibility. Thus, this method is successful although limited sample volume and time might only be available and this method avoids that the DLS measurements are omitted or performed in different conditions and on different samples than the SAXS analysis.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfil the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

## Claims

1. A measurement cell (200) for small angle X-ray scattering (SAXS) measurements and for dynamic light scattering (DLS) measurements, the measurement cell comprising
a sample compartment (101, 201) for containing the sample (102),
a sample holder (103, 203) for holding the sample compartment,
wherein the measurement cell is configured for guiding X-rays (104, 204) of an X-ray source onto the sample compartment (101, 201),
the measurement cell further comprising
a light source (105, 205) applied for dynamic light scattering (DLS) of the sample in the sample compartment,
a detector (106A, 106B, 206) for detecting light emitted by the light source and scattered by the sample in the sample compartment, and
light transportation (212, 213, 110, 111) means which are arranged and configured for transporting light of the light source towards the sample in the sample compartment and/or for transporting light scattered from the sample towards the detector.

2. The measurement cell according to claim 1,
wherein the light transportation means comprise at least a first and a second window (212, 213) located at a housing of the measurement cell, and
wherein the first window (212) is optically transparent for the light emitted by the light source and wherein the second window (213) is optically transparent for the light scattered by the sample in the sample compartment.

3. The measurement cell according to claim 1 or 2,
wherein the light transportation means comprise at least a first and a second window or hole (110, 111) located at the sample holder (103), and
wherein the first window or first hole is optically transparent for the light emitted by the light source and wherein the second window or second hole is optically transparent for the light scattered by the sample in the sample compartment.

4. The measurement cell according to any of the preceding claims, comprising
a fiber optics arrangement arranged and configured for at least partially guiding light of the light source towards the sample in the sample compartment.

5. The measurement cell according to any of the preceding claims, wherein the measurement cell is configured for carrying out a DLS measurement and a SAXS measurement on the same sample contained in the sample compartment when provided with X-rays of an X-ray source.

6. The measurement cell according to any of the preceding claims, comprising
a correlation device, and
wherein the correlation device is configured for determining at least one parameter selected from size and/or radius for one or more particle species contained in the sample, polydispersity, estimation of a molecular weight of one or more particle species contained in the sample, information about particle concentration, and any combination thereof.

7. The measurement cell according to claim 6, comprising
a plurality of detectors (206) each configured for detecting light emitted by the light source and scattered by the sample in the sample compartment, and
wherein the correlation device is configured for calculating for each of the detectors a respective autocorrelation function of the sample, and
wherein the correlation device is configured for averaging the calculated autocorrelation functions.

8. The measurement cell according to claim 7, comprising
wherein the correlation device is configured for averaging the autocorrelation functions and a subsequent inversion of the averaged autocorrelation functions to a radial distribution, or the correlation device is configured for simultaneously inverting all autocorrelation functions by a computer program.

9. The measurement cell according to any of the preceding claims,
wherein the light source for DLS has a distance (f) to the sample compartment of 100 mm or less, and/or
wherein the detector has a distance (f') to the sample compartment of 100 mm or less.

10. The measurement cell according to any of the preceding claims, wherein the detector detects light scattered at the sample at a scattering angle (µ), and
wherein the scattering angle (µ) is between 75° and 108° including 75° and 108°.

11. The measurement cell according to any of the preceding claims, comprising
an automatic pipeline which is configured for receiving the data obtained from the DLS and SAXS measurements

12. The measurement cell according to claim 11, comprising an autosampler, and
wherein the autosampler is configured for initiating loading of the sample, DLS and X-ray data collection, discarding the sample and washing and drying the sample compartment.

13. The measurement cell according to claim 12,
wherein the autosampler comprises the light source for DLS and the detector for detecting the light emitted by the DLS light source and scattered by the sample.

14. The measurement cell according to any of the preceding claims,
wherein the sample holder is at least partially surrounded by vacuum, and
wherein the light source for DLS is positioned outside of the vacuum.

15. The measurement cell according to any of the preceding claims,
wherein the measurement cell is configured for avoiding stray light caused by reflections of light of the light source on at least one of the windows and/or on the sample holder.

16. A small angle X-ray scattering (SAXS) device comprising
an X-ray source, in particular a synchrotron, and
a measurement cell for SAXS measurements and for dynamic light scattering (DLS) measurements in the same sample compartment according to any of claims 1 to 15.

17. Method of solution scattering for quality assessment of a sample, in particular of a biological sample, the method comprising the steps
conducting a dynamic light scattering (DLS) measurement of the sample within a sample compartment in a small angle X-ray scattering (SAXS) device (S1), and
conducting a SAXS measurement of the same sample in the same compartment and in said SAXS device (S2).

18. The method according to claim 17, comprising the steps
directing light from a light source to the sample in the sample compartment which is hold by a sample holder of a measurement cell,
detecting light emitted by the light source and scattered by the sample in the sample compartment,
determining a first parameter on the dispersity of the sample based on the scattered and detected light,
directing X-rays from an X-ray source onto the sample,
detecting X-rays emitted from the X-ray source and scattered by the sample, and
determining a second parameter on the dispersity of the sample based on the scattered and detected X-rays.
